# EUROPEAN PATENT SPECIFICATION

(11) **EP 3 758 167 B1**
(45) Date of publication and mention of the grant of the patent: **27.12.2023**
(21) Application number: 19841699.2
(22) Date of filing: 03.07.2019
(51) Int. Cl.: H01R 43/28, H02G 1/12, H01R 43/05, B23D 79/12, H02K 15/04

(54) **COPPER WIRE VARNISH STRIPPING APPARATUS**
KUPFERDRAHTLACKABISOLIERGERÄT
APPAREIL DE DÉCAPAGE DE VERNIS SUR FIL DE CUIVRE

(30) Priority: 27.07.2018 CN 201810841553
(43) Date of publication of application: 30.12.2020
(73) Proprietor: Juli Automation Equipment (Zhejiang) Co., Ltd., Jiaxing, Zheijing 314000 (CN)
(72) Inventor: ZHANG, RiPing, Jiaxing, Zhejiang 314000 (CN); LIAO, WangSheng, Jiaxing, Zhejiang 314000 (CN)
(74) Representative: Ipey
(86) International application number: PCT/CN2019/094462
(87) International publication number: WO 2020/019949

(56) References cited:
- EP-A1- 3 240 161
- CN-A- 107 681 564
- CN-A- 108 054 684
- CN-A- 108 988 103
- CN-U- 205 159 768
- CN-U- 207 409 792
- CN-U- 208 571 207
- CN-Y- 201 038 589
- US-A- 4 630 353
- US-A1- 2018 083 428

## Description

### Technical Field

This disclosure generally relates to the technical field of copper wire forming, and more particularly, to a copper wire varnish stripping apparatus.

### BACKGROUND

After being unwound from a reel, the copper wire is cut, extruded and then formed into a certain shape. Between the unwinding and cutting steps, to improve the electrical conductivity of the copper wire, the varnish coating on the two ends of the copper wire needs to be scraped off. However, conventional stripping apparatuses perform a varnish scraping operation only after the cutting and extrusion forming are completed. The inconvenient removal of the varnish coating and the difficult clamping and fixing of the copper wire result in complicated operation and poor overall effect. To solve the aforesaid problems, the present disclosure provides a novel copper wire varnish stripping apparatus.

Document US2018083428A1 disclose a peeling apparatus and peeling method, the peeling apparatus 1 includes a first peeling die and a second peeling die respectively including a pair of cutting blades 251 that peels the insulating film by being moved in a direction perpendicular to an axial direction of the conductive wire material 2 to cut the insulating film, and a support die 253 that supports a side surface of the conductive wire material 2 from a downstream side in a moving direction of the cutting blades 251 at the time of cutting by the cutting blades 251, the support die 253 of the first peeling die including a convex portion 2533 protruding toward the conductive wire material 2.

Document EP3240161A1 disclose coil forming device and coil of a rotating electric device, comprises a first bending unit 200A that performs a compression bending process with respect to a linear conductor; and a second bending unit 200B that performs a draw bending process with respect to the linear conductor, wherein the first bending unit 200A and the second bending unit 200B are integrated in one device, and wherein the first bending unit 200A and the second bending unit 200B are switched to access one linear conductor so as to perform the compression bending process and the draw bending process onto the one linear conductor.

The paint stripping process of the above-mentioned equipment is cumbersome to operate, and there is no overall paint stripping collection and processing setting, which results in poor safety performance and low efficiency.

### SUMMARY

The purpose of the present disclosure is to provide a copper wire varnish stripping apparatus, which may directly perform a varnish scraping operation on copper wire that is being conveyed, thus saving time and providing a good scraping effect. The present varnish stripping apparatus further collects the varnish coating such that the apparatus is tidy and has good safety.

To achieve the above purpose, the present disclosure adopts the following technical solution: the copper wire varnish stripping apparatus according to independent claim 1.

Through adopting the aforesaid technical solution, the bottom plate may be mounted on an assembly line such that the linear motor carries along the bottom plate to move linearly. The two ends of a section of the copper wire are tightly pressed by the pressing mechanisms, and the copper wire has been conveyed over is scraped by the scraper mechanism arranged between the pressing mechanisms.

Through adopting the aforesaid technical solution, the first motor propels the screw rod to rotate through the transmission of the synchronous belt such that the lead screw nut on the screw rod carries along the moving platform to reciprocate. The partition plate is vertically mounted on the moving platform, and a vertical track is mounted on the moving platform. The second motor propels the two-way screw rod to rotate, thus making the upper blade holder and the lower blade holder move in the same direction or opposite directions, which enables the first blades to scrape the varnish coating off the upper and lower surfaces of the copper wire.

In another aspect of the present disclosure, the other side of the partition plate is provided with a horizontal track perpendicular to the vertical track, and the horizontal track is slidably connected to a left blade holder and a right blade holder. The left blade holder and the right blade holder are respectively provided with a second blade. Third lead screw nuts are respectively arranged on the left blade holder and the right blade holder, a second two-way screw rod is arranged on the third lead screw nuts , and a third motor fixedly connected to the partition plate is arranged on the second two-way screw rod.

Through adopting the aforesaid technical solution, when the moving platform reciprocates, the third motor propels the second two-way screw rod to rotate, thus making the left blade holder and the right blade holder move in the same direction or opposite directions, which enables the second blades to scrape the varnish coating off the left and right surfaces of the copper wire.

In another aspect of the present disclosure, the pressing mechanism of the present disclosure comprises a side supporting plate arranged on the top surface of the bottom plate, wherein an air cylinder is arranged on the side supporting plate, and a pressing block is arranged at the telescopic end of the air cylinder. A copper wire conveying plate is arranged below the pressing block, a guiding wheel group is arranged on the copper wire conveying plate, and the guiding wheel group comprises left and right second guiding wheels. The second guiding wheels are rotatably connected to the copper wire conveying plate. One end of the copper wire conveying plate is provided with an upper pressing wheel, and the upper pressing wheel is arranged above the copper wire conveying plate.

Through adopting the aforesaid technical solution, the pressing block tightly presses the copper wire that has been conveyed over, and the second guiding wheels exerts an auxiliary conveying and guiding functions. The upper pressing wheel presses the upper surface of the copper wire that has been conveyed over, allows the copper wire to be stably conveyed and prevents the copper wire from warping upwards.

In another aspect of the present disclosure, the other end of the copper wire conveying plate is provided with a secondary varnish scraping block, and the secondary varnish scraping block is provided with a square hole located between each group of second guiding wheels.

Through adopting the aforesaid technical solution, the square hole is used for allowing the copper wire that has been conveyed over to pass through, and the shape and size of the square hole matches the copper wire. As there is residual coating left on the copper wire after the varnish coating is preliminarily scraped off by the blades, when the copper wire passes through the square hole with matched shape and size, the square hole crapes off the residual coating, thereby achieving a secondary cleaning. The secondary varnish scraping block is arranged between the second guiding wheels , which makes the copper wire stay in a straight line during the conveying process, so that the conveying of the copper wire is facilitated.

In another aspect of the present disclosure, the square hole is covered by a scrap suction hood, and the scrap suction hood is provided with an air suction port.

Through adopting the aforesaid technical solution, the varnish coating scraped off by the square hole is conveniently collected. The air suction port on the scrap suction hood allows an air suction apparatus to be easily installed. The air suction apparatus provides a negative pressure in the scrape suction hood, which effectively sucks away the scraps collected in the scrap suction hood, so that the accumulation and blocking are avoided.

In another aspect of the present disclosure, a guiding hole is formed in the copper wire conveying plate, and a guide post integrated with the pressing block is slidably connected within the guiding hole.

Through adopting the aforesaid technical solution, the guiding hole is vertically formed in the copper wire conveying plate, and the guiding post is inserted in the corresponding guiding hole. In this way, when the pressing block moves up and down, the offset of the pressing block is avoided.

In another aspect of the present disclosure, the upper blade holder, the lower blade holder, the left blade holder and the right blade holder are respectively provided with an air path. Each air path is provided with an air inlet and an air outlet. The first blades and the second blades are respectively provided with a second through hole , and the second through hole is communicated with the air outlet. The upper blade holder, the lower blade holder, the left blade holder and the right blade holder are respectively covered by a connecting hood. The connecting hood is provided with a connecting pipe communicated with the interior of the connecting hood. A copper wire penetrating hole is formed in the pipe wall of the connecting pipe.

Through adopting the aforesaid technical solution, the first blades and the second blades are respectively provided with a second through hole, and the second through hole is communicated with the air outlet. The air inlet allows air to enter. When the blades scrape the copper wire, a part of the varnish coating is left on the blades. The air entering from the air inlet is blown out from the second through hole of the blade, thereby blown off the residual varnish coating left on the blades. The residual varnish coating falls into the connecting hood and is blown out from the connecting pipe such that the collection of the residual coating is completed. In this way, the scraps are prevented from being accumulated on the apparatus to affect the operation, and hidden dangers are avoided.

In another aspect of the present disclosure, the connecting hood is provided with an observing window, and the observing window is provided with a light-transmitting plate.

Through adopting the aforesaid technical solution, the observing window and the light-transmitting plate allow a user to directly observe the collecting condition of the scraps.

In another aspect of the present disclosure, a process hole is formed in the air path, and a blocking screw is arranged in the process hole.

Through adopting the aforesaid technical solution, after the machining of the air path is completed, the process hole is sealed by using the blocking screw. Thus, an air path with an air inlet and an air outlet is formed.

Compared with the prior art, the present disclosure has the following advantages:
Due to the bottom plate provided with a moving platform capable of reciprocating and the moving platform provided with an upper blade holder, a lower blade holder, a left blade holder and a right blade holder, the scraping operation may be performed on the four sides of the copper wire. The motors propel the two-way screw rods to rotate, thereby enabling the upper blade holder and the lower blade holder to move in the same direction or opposite directions, and enabling the left blade holder and the right blade holder to move in the same direction or opposite directions. Thus, the scraping depth of the blades may be accurately controlled, and a scraping operation may be divided into two scraping processes, which makes the scraping effect better and allows the scraping amount to be precisely controlled. Through the air path formed in the blade holder, the air outlet is communicated with the second through hole on the blade. As the air outlet is provided with a connecting hood, when air enters from the air inlet, the varnish coating scraps may be blown off and then collected in the connecting hood and the connecting pipe, thereby achieving the collection of the scraps. Through the arrangement of the light-transmitting plate, the collecting condition of the scraps may be directly observed. Moreover, the process hole facilitates the processing of the air path, the second guiding wheels allow the copper wire that is being conveyed to be guided and conveyed, and the upper pressing wheel prevents the copper wire from warping upwards. Through the varnish scraping block provided with the square hole, the secondary cleaning of the residual varnish coating on the copper wire is achieved, and through the scrap suction hood, the collection of the fallen varnish coating scraps is realized. The present disclosure has complete overall functions and strong practicability.

### BRIEF DESCRIPTION OF THE DRAWINGS

Figure 1 is a conceptual diagram illustrating an example structure of the present disclosure.
Figure 2 is a conceptual diagram illustrating an example structure of the present disclosure from another viewing angle.
Figure 3 is a conceptual diagram illustrating an example structure of the scraper mechanism of the present disclosure.
Figure 4 is a conceptual diagram illustrating an example structure of the left blade holder and the right blade holder of the present disclosure.
Figure 5 is a conceptual diagram illustrating an example structure of the upper blade holder and the lower blade holder of the present disclosure.
Figure 6 is a conceptual diagram illustrating an example structure of the upper, lower left and right blade holders of the present disclosure.
Figure 7 is a conceptual diagram illustrating an example structure of the connecting hood of the scraper mechanism of the present disclosure.
Figure 8 is a conceptual diagram illustrating an example structure of the pressing mechanism of the present disclosure.
Figure 9 is a conceptual diagram illustrating an example structure of the pressing mechanism without the scrap suction hood of the present disclosure.
Figure 10 is a conceptual diagram illustrating a partial structure of the pressing mechanism of the present disclosure.

Marking Instructions of the Figures: 4000-Scraper Mechanism, 5000-Pressing Mechanism, 61-Bottom Plate, 62-Side Plate, 63-Screw Rod, 64-Synchronous Belt, 65-First Motor, 66-Lead Screw Nut, 67-Moving Platform, 68-Partition Plate, 69-Vertical Track, 70-Upper Blade Holder, 71-Lower Blade Holder, 72-First Blade, 73- Second Lead Screw Nut, 74-First Two-way Screw Rod, 75-Second Motor, 77-Left Blade Holder, 78-Right Blade Holder, 79-Second Blade, 80- Third Lead Screw Nut, 81-Second Two-way Screw Rod, 82-Third Motor, 85-Air Path, 86-Air Inlet, 87-Air Outlet, 88-Second Through Hole, 89-Connecting Hood, 90-Connecting Pipe, 91-Copper Wire Penetrating Hole, 92-Observing Window, 93-Light-transmitting Plate, 95-Process Hole, 96-Blocking Screw, 98-Supporting Side Plate, 99-Air Cylinder, 100-Pressing Block, 101-Copper Wire Conveying Plate, 102-Second Guiding Wheel, 104-Upper Pressing Wheel, 105-Secondary Varnish Scraping Block, 106-Square Hole, 107-Scrap Suction Hood, 108-Air Suction Port, 109-Guiding Hole, 110-Guiding Post, 112-Linear Motor.

### DETAILED DESCRIPTION

Figures and preferred embodiments are combined hereinafter to further elaborate the technical solution of the present disclosure.

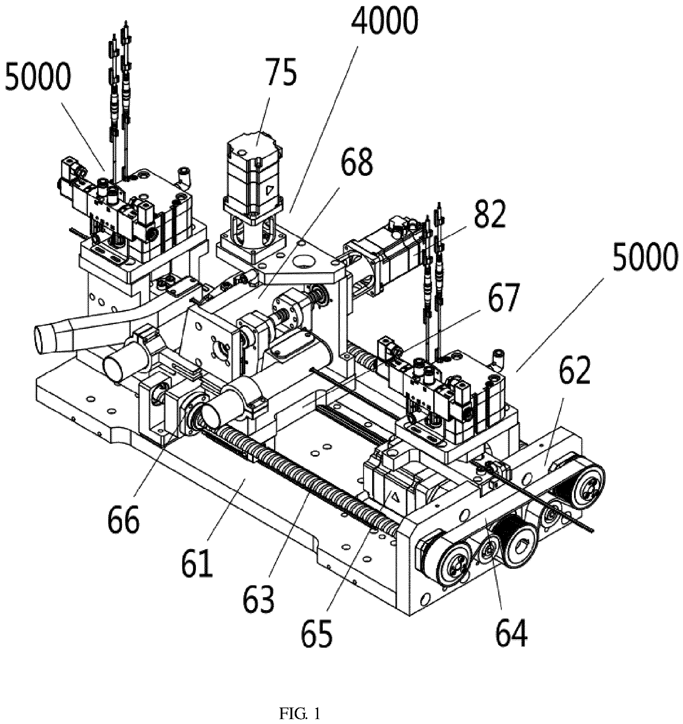

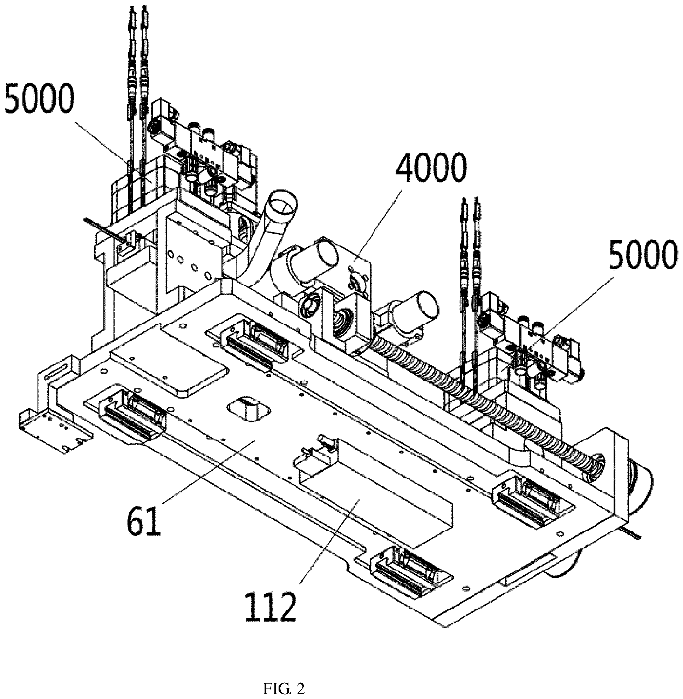

As shown in Figures 1-2, the copper wire varnish stripping apparatus of the present disclosure comprises a bottom plate 61, wherein a bottom surface of the bottom plate is provided thereon with a linear motor 112, a top surface of the bottom plate is provided thereon with a scraper mechanism 4000, and two sides of the scraper mechanism are respectively provided with a pressing mechanism 5000. The bottom plate 61 may be mounted on an assembly line such that the linear motor carries along the bottom plate to move linearly. The pressing mechanism 5000 is used for pressing and fixing the copper wire that has been conveyed over, pressing the two ends of a section of the copper wire that is being conveyed, and moving forward along with the copper wire. The scraper mechanism 4000 arranged between the two pressing mechanisms 5000 is used for performing a varnish scraping operation on the copper wire whose two ends are tightly pressed, thereby partially scraping the varnish coating off the surface of the copper wire that is being conveyed.

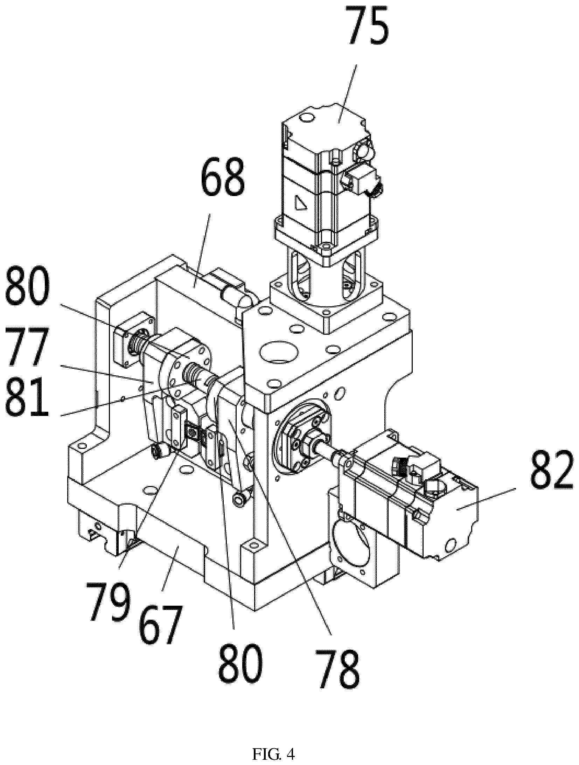

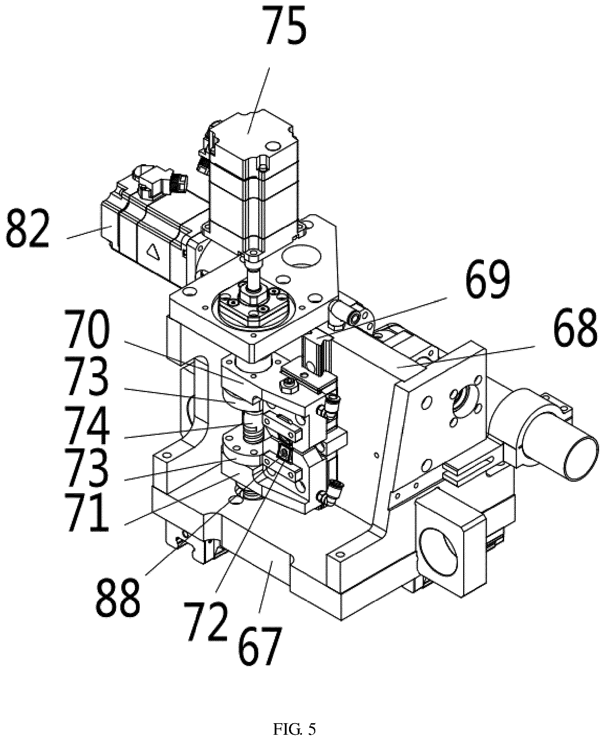

As shown in Figures 1, 3, 4 and 5, the scraper mechanism 4000 of the present disclosure comprises a side plate 62 arranged on the top surface of the bottom plate 61, wherein a screw rod 63 is rotatably connected to the side plate 62, and one end of the screw rod 63 is sleeved with a synchronous belt 64. A first motor 65 is arranged on the synchronous belt 64, a lead screw nut 66 is arranged on the screw rod 63, and a moving platform 67 is arranged on the lead screw nut 66. The moving platform 67 is provided with a partition plate 68 having a through hole, one side of the partition plate 68 is provided with a vertical track 69, and the vertical track 69 is slidably connected with an upper blade holder 70 and a lower blade holder 71. The upper blade holder 70 and the lower blade holder 71 are respectively provided with a first blade 72. Second lead screw nuts 73 are respectively arranged on the upper blade holder 70 and the lower blade holder 71, a first two-way screw rod 74 is arranged on the second lead screw nuts 73, and a second motor 75 fixedly connected to the partition plate 68 is arranged on the first two-way screw rod 74. The other side of the partition plate 68 is provided with a horizontal track (not shown) perpendicular to the vertical track 69, and the horizontal track is slidably connected to a left blade holder 77 and a right blade holder 78. The left blade holder 77 and the right blade holder 78 are respectively provided with a second blade 79. Third lead screw nuts 80 are respectively arranged on the left blade holder 77 and the right blade holder 78, a second two-way screw rod 81 is arranged on the third lead screw nuts 80, and a third motor 82 fixedly connected to the partition plate 68 is arranged on the second two-way screw rod 81. The forward and reverse rotation of the first motor 65, as well as the transmission of the synchronous belt 64, enables the screw rod 63 to rotate, thus enabling the moving platform 67 fixedly mounted on the lead screw nut 66 to reciprocate on the screw rod 63. Meanwhile, the second motor 75 controls the first two-way screw rod 74 to rotate. When the first two-way screw rod 74 rotates clockwise, the upper blade holder 70 and the lower blade holder 71 move in opposite directions through the second lead screw nuts 73. In this way, the upper and lower positions of the copper wire passing through the through hole is fixed. The upper and lower end surfaces of the copper wire are clamped by the first blades 72 on the upper blade holder 70 and the lower blade holder 71, and the third motor 82 controls the second two-way screw rod 81 to rotate. When the second two-way screw rod 81 rotates clockwise, the left blade holder 77 and the right blade holder 78 move in opposite directions through the third lead screw nuts 80 such that the left and right positions of the copper wire passing through the through hole is fixed. The left and right end surfaces of the copper wire is clamped by the second blades on the left blade holder 77 and the right blade holder 78. As the moving platform 67 reciprocates, the first blades 72 and the second blades 79 clamping the copper wire interact to scrape the varnish coating off the upper, lower, left and right surfaces of the copper wire, thus partially completing the varnish scraping process. At this point, the second motor 75 and the third motor 82 re-control the first two-way screw rod 74 to rotate reversely, which allows the first blades 72 and the second blades 79 to release the copper wire. After the copper wire is continuously conveyed to a certain distance, the copper wire varnish stripping apparatus of the present disclosure starts performing a varnish scraping operation from another position.

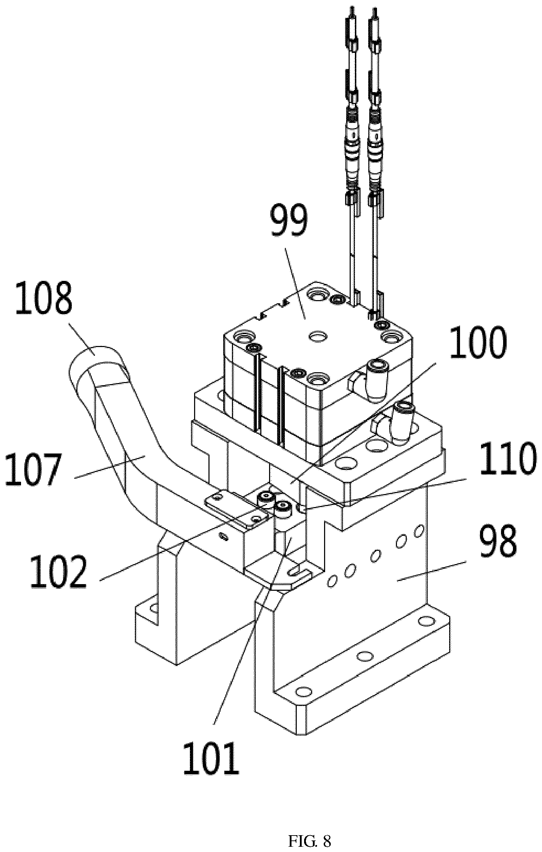

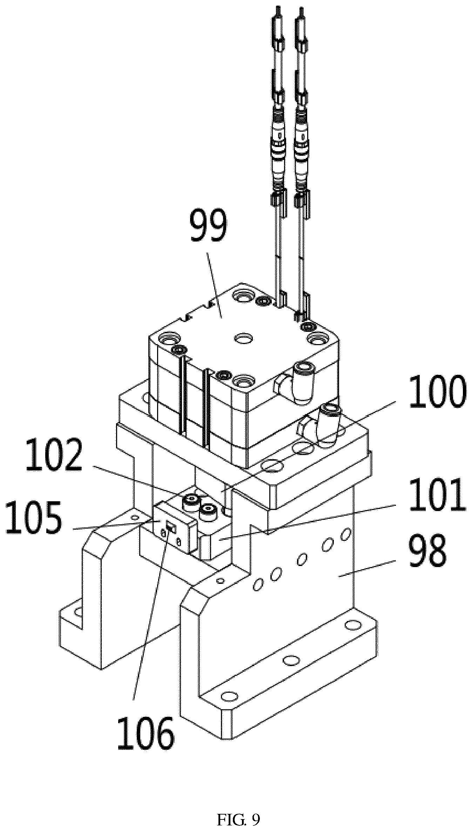

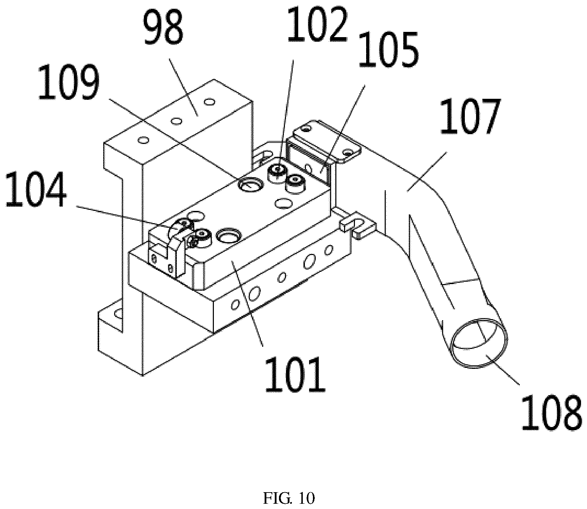

As shown in Figures 1, 8, 9 and 10, the pressing mechanism 5000 of the present disclosure comprises a side supporting plate 98 arranged on the top surface of the bottom plate 61, wherein an air cylinder 99 is arranged on the side supporting plate 98, and a pressing block 100 is arranged at the telescopic end of the air cylinder 99. A copper wire conveying plate 101 is arranged below the pressing block 100, a guiding wheel group is arranged on the copper wire conveying plate 101, and the guiding wheel group comprises left and right second guiding wheels 102. The second guiding wheels 102 are rotatably connected to the copper wire conveying plate 101. One end of the copper wire conveying plate 101 is provided with an upper pressing wheel 104, and the upper pressing wheel 104 is arranged above the copper wire conveying plate 101. The other end of the copper wire conveying plate 101 is provided with a secondary varnish scraping block 105, and the secondary varnish scraping block 105 is provided with a square hole 106 located between each group of second guiding wheels 102. The square hole 106 is used for allowing the copper wire that has been conveyed over to pass through, and the shape and size of the square hole 106 matches the copper wire. The copper wire that has been conveyed over passes through the square hole 106 first, then passes between the groups of second guiding wheels 102, and then goes out from the lower portion of the upper pressing wheel 104 on the other end of the copper wire conveying plate 101. As there is residual varnish coating on the copper wire after the varnish coating is scraped off by the blades, when the copper wire passes through the square hole 106 with matched shape and size, the square hole 106 scrapes off the residual coating, thereby performing a secondary cleaning. The air cylinder 99 is used for controlling the pressing block 100 to move up and down while tightly pressing the copper wire on the copper wire conveying plate 101.

Further, the square hole 106 is covered by a scrap suction hood 107, the scrap suction hood 107 is provided with an air suction port 108, and an air suction apparatus such as an air suction fan is installed in the air suction port 108. The air suction fan produces a negative pressure within the scrap suction hood 107, which allows the varnish coating scraps to be sucked and collected.

Further, a guiding hole 109 is formed in the copper wire conveying plate 101, and a guide post 110 integrated with the pressing block 100 is slidably connected within the guiding hole 109. Through adopting the aforesaid design, the guiding post 110 on the pressing block 100 moves up and down within the guiding hole 109, so that the guiding post 110 is fixed and the offset is avoided.

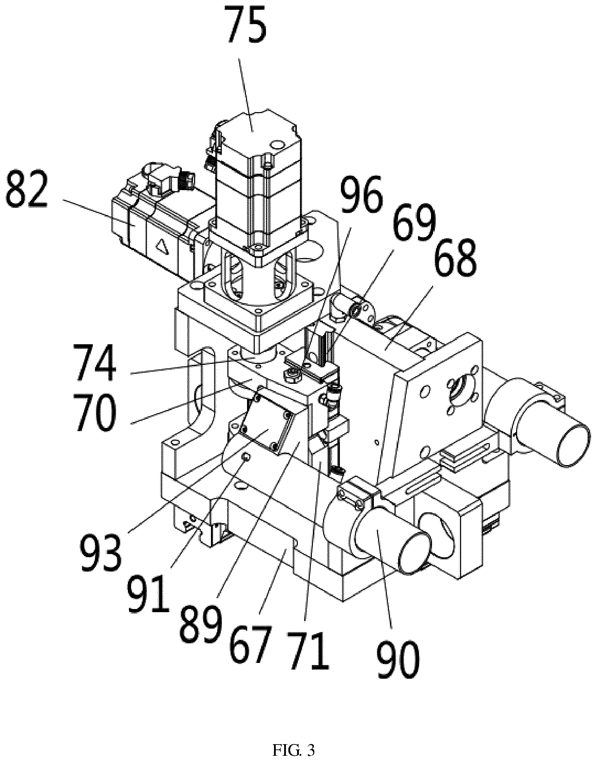

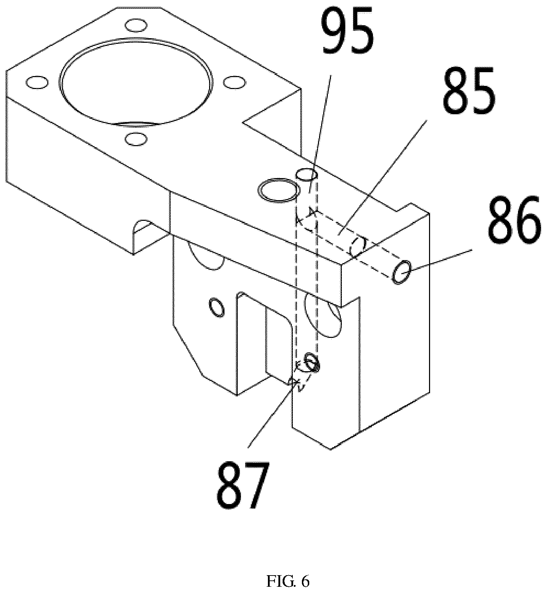

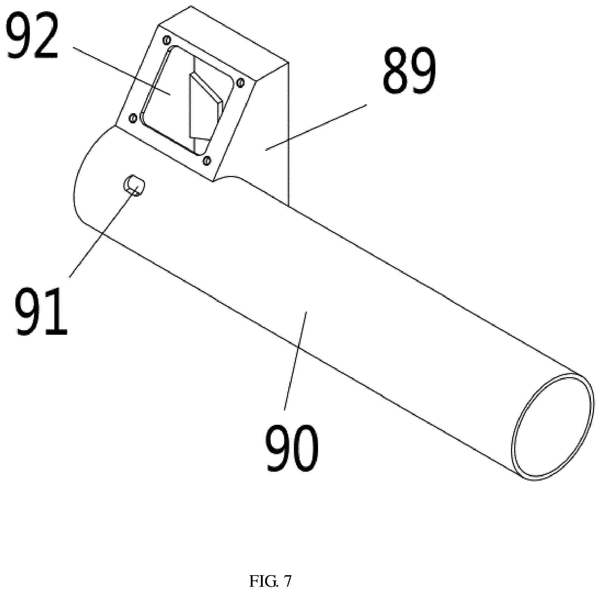

As shown in Figures 3-7, in this embodiment, the upper blade holder 70, the lower blade holder 71, the left blade holder 77 and the right blade holder 78 are respectively provided with an air path 85. Each air path 85 is provided with an air inlet 86 and an air outlet 87. The first blades 72 and the second blades 79 are respectively provided with a second through hole 88, and the second through hole 88 is communicated with the air outlet 87. The upper blade holder 70, the lower blade holder 71, the left blade holder 77 and the right blade holder 78 are respectively covered by a connecting hood 89. The connecting hood 89 is provided with a connecting pipe 90 communicated with the interior of the connecting hood 89. A copper wire penetrating hole 91 is formed in the pipe wall of the connecting pipe 90, and the copper wire penetrating hole 91 is used for allowing the copper wire that is being conveyed to pass through. When the copper wire is scraped by the first blades 72 and the second blades 79, the scraps (varnish coating scraps) accumulated at the front end of the first blades 72 and the second blades 79 fall into the connecting hood 89 and then enter the connecting pipe 90. Through the arrangement of the air path 85, the air may enter through the air inlet 86 to produce a positive pressure, which allows the scraps accumulated at the front end of the blades to be blown off into the connecting hood 89 and the connecting pipe 90. Thus, the collection of the scraps is completed.

Further, the connecting hood 89 is provided with an observing window 92, and the observing window 92 is provided with a light-transmitting plate 93 for allowing a user to directly observe the collecting condition of the scraps.

Further, a process hole 95 is formed in the air path 85, and a blocking screw 96 is arranged in the process hole 95. By means of this design, the processing of the air path 85 is greatly facilitated.

Due to the bottom plate provided with the moving platform capable of reciprocating and the moving platform provided with the upper blade holder, the lower blade holder, the left blade holder and the right blade holder, the scraping operation may be performed on the four sides of the copper wire. The motors propel the two-way screw rods to rotate, thereby enabling the upper blade holder and the lower blade holder to move in the same direction or opposite directions, and enabling the left blade holder and the right blade holder to move in the same direction or opposite directions. Thus, the scraping depth of the blades may be accurately controlled, and a scraping operation may be divided into two scraping processes, which makes the scraping effect better and allows the scraping amount to be precisely controlled. Through the air path formed in the blade holder, the air outlet is communicated with the second through hole on the blade. As the air outlet is provided with a connecting hood, when air enters from the air inlet, the varnish coating scraps may be blown off and then collected in the connecting hood and the connecting pipe, thereby achieving the collection of the scraps. Through the arrangement of the light-transmitting plate, the collecting condition of the scraps may be directly observed. Moreover, the process hole facilitates the processing of the air path, the second guiding wheels allow the copper wire that is being conveyed to be guided and conveyed, and the upper pressing wheel prevents the copper wire from warping upwards. Through the varnish scraping block provided with the square hole, the secondary cleaning of the residual varnish coating on the copper wire is achieved, and through the scrap suction hood, the collection of the fallen varnish coating scraps is realized. The present disclosure has complete overall functions and strong practicability.

The above are merely preferred embodiments of the present disclosure. Those skilled in the art may make modifications and alterations according to the concepts of the present disclosure without paying creative labor. Therefore, all technical solutions obtained by those skilled in the art through logical analysis, reasoning or limited experiments on the basis of the prior art according to the concepts of the present disclosure shall fall into the scope defined by the claims of the present disclosure.

## Claims

1. A copper wire varnish stripping apparatus, comprising:
a bottom plate (61), wherein a top surface of the bottom plate is provided thereon with a scraper mechanism (4000), and two sides of the scraper mechanism are respectively provided with a pressing mechanism (5000); **characterized in that**:
a bottom surface of the bottom plate is provided thereon with a linear motor (112) such that the bottom plate (61) is mountable on an assembly line such that the linear motor (112) carries along the bottom plate (61) to move linearly,
wherein the scraper mechanism (4000) comprises:
a side plate (62) arranged on the top surface of the bottom plate (61), wherein a screw rod (63) is rotatably connected to the side plate (62), and one end of the screw rod (63) is sleeved with a synchronous belt (64), wherein a first motor (65) is arranged on the synchronous belt (64), a lead screw nut (66) is arranged on the screw rod (63), and a moving platform (67) is arranged on the lead screw nut (66), such that the forward and reverse rotation of the first motor (65), as well as the transmission of the synchronous belt (64), enables the lead screw rod (63) to rotate, thus enabling the moving platform (67) on the lead screw nut (66) to reciprocate on the lead screw rod (63), wherein
the moving platform (67) is provided with a partition plate (68) having a through hole, one side of the partition plate (68) is provided with a vertical track (69), and the vertical track (69) is slidably connected with an upper blade holder (70) and a lower blade holder (71), wherein the upper blade holder (70) and the lower blade holder (71) are respectively provided with a first blade (72), wherein second lead screw nuts (73) are respectively arranged on the upper blade holder (70) and the lower blade holder (71), a first two-way screw rod (74) is arranged on the second lead screw nuts (73), and a second motor (75) fixedly connected to the partition plate (68) is arranged on the first two-way screw rod (74).

2. The copper wire varnish stripping apparatus of claim 1, wherein the other side of the partition plate (68) is provided with a horizontal track perpendicular to the vertical track (69), and the horizontal track is slidably connected to a left blade holder (77) and a right blade holder (78), wherein the left blade holder (77) and the right blade holder (78) are respectively provided with a second blade (79), wherein third lead screw nuts (80) are respectively arranged on the left blade holder (77) and the right blade holder (78), a second two-way screw rod (81) is arranged on the third lead screw nuts (80), and a third motor (82) fixedly connected to the partition plate (68) is arranged on the second two-way screw rod (81).

3. The copper wire varnish stripping apparatus of claim 1, wherein the pressing mechanism (5000) comprises:
a side supporting plate (98) arranged on the top surface of the bottom plate (61), wherein an air cylinder (99) is arranged on the side supporting plate (98), and a pressing block (100) is arranged at the telescopic end of the air cylinder (99), wherein a copper wire conveying plate (101) is arranged below the pressing block (100), a guiding wheel group is arranged on the copper wire conveying plate (101), and the guiding wheel group comprises left and right second guiding wheels (102), wherein the second guiding wheels (102) are rotatably connected to the copper wire conveying plate (101), wherein one end of the copper wire conveying plate (101) is provided with an upper pressing wheel (104), and the upper pressing wheel (104) is arranged above the copper wire conveying plate (101).

4. The copper wire varnish stripping apparatus of claim 3, wherein the other end of the copper wire conveying plate (101) is provided with a secondary varnish scraping block (105), and the secondary varnish scraping block (105) is provided with a square hole (106) located between each group of second guiding wheels (102).

5. The copper wire varnish stripping apparatus of claim 4, wherein the square hole (106) is covered by a scrap suction hood (107), and the scrap suction hood (107) is provided with an air suction port (108).

6. The copper wire varnish stripping apparatus of claim 3 or 5, wherein a guiding hole (109) is formed in the copper wire conveying plate (101), and a guide post (110) integrated with the pressing block (100) is slidably connected within the guiding hole (109).

7. The copper wire varnish stripping apparatus of claim 2, wherein the upper blade holder (70), the lower blade holder (71), the left blade holder (77) and the right blade holder (78) are respectively provided with an air path (85), wherein each air path (85) is provided with an air inlet (86) and an air outlet (87), wherein the first blades (72) and the second blades (79) are respectively provided with a second through hole (88), and the second through hole (88) is communicated with the air outlet (87), wherein the upper blade holder (70), the lower blade holder (71), the left blade holder (77) and the right blade holder (78) are respectively covered by a connecting hood (89), wherein the connecting hood (89) is provided with a connecting pipe (90) communicated with the interior of the connecting hood (89), wherein a copper wire penetrating hole (91) is formed in the pipe wall of the connecting pipe (90).

8. The copper wire varnish stripping apparatus of claim 7, wherein the connecting hood (89) is provided with an observing window (92), and the observing window (92) is provided with a light-transmitting plate (93).

9. The copper wire varnish stripping apparatus of claim 7, wherein a process hole (95) is formed in the air path (85), and a blocking screw (96) is arranged in the process hole (95).

## Patentansprüche

1. Kupferdrahtlackabisoliergerät, umfassend:
eine untere Platte (61), wobei eine obere Fläche der unteren Platte darauf mit einem Abstreifmechanismus (4000) bereitgestellt ist und zwei Seiten des Abstreifmechanismus jeweils mit einem Andrückmechanismus (5000) bereitgestellt sind; **dadurch gekennzeichnet, dass**: eine untere Fläche der unteren Platte darauf mit einem Linearmotor (112) bereitgestellt ist, sodass die untere Platte (61) an einer Montagelinie montierbar ist, sodass der Linearmotor (112) entlang der unteren Platte (61) trägt, um sich linear zu bewegen,
wobei der Abstreifmechanismus (4000) Folgendes umfasst:
eine Seitenplatte (62), die auf der oberen Fläche der unteren Platte (61) angeordnet ist, wobei eine Schraubenstange (63) drehbar mit der Seitenplatte (62) verbunden ist und ein Ende der Schraubenstange (63) mit einem Synchronriemen (64) ummantelt ist, wobei ein erster Motor (65) an dem Synchronriemen (64) angeordnet ist,
eine Führungsschraubenmutter (66) an der Schraubenstange (63) angeordnet ist und eine sich bewegende Plattform (67) an der Führungsschraubenmutter (66) angeordnet ist, sodass die Vorwärts- und Rückwärtsdrehung des ersten Motors (65) sowie das Getriebe des Synchronriemens (64) ermöglichen, dass sich die Führungsschraubenstange (63) dreht, wodurch ermöglicht wird, dass sich die sich bewegende Plattform (67) an der Führungsschraubenmutter (66) an der Führungsschraubenstange (63) hin- und herbewegt, wobei
die sich bewegende Plattform (67) mit einer Trennplatte (68) bereitgestellt ist, die ein Durchgangsloch aufweist, wobei eine Seite der Trennplatte (68) mit einer vertikalen Schiene (69) bereitgestellt ist und die vertikale Schiene (69) verschiebbar mit einem oberen Klingenhalter (70) und einem unteren Klingenhalter (71) verbunden ist, wobei der obere Klingenhalter (70) und der untere Klingenhalter (71) jeweils mit einer ersten Klinge (72) bereitgestellt sind, wobei zweite Führungsschraubenmuttern (73) jeweils an dem oberen Klingenhalter (70) und dem unteren Klingenhalter (71) angeordnet sind, eine erste Zweiwege-Schraubenstange (74) an den zweiten Führungsschraubenmuttern (73) angeordnet ist und ein zweiter Motor (75), der fest mit der Trennplatte (68) verbunden ist, an der ersten Zweiwege-Schraubenstange (74) angeordnet ist.

2. Kupferdrahtlackabisoliergerät nach Anspruch 1, wobei die andere Seite der Trennplatte (68) mit einer senkrecht zu der vertikalen Schiene (69) verlaufenden horizontalen Schiene bereitgestellt ist und die horizontale Schiene verschiebbar mit einem linken Klingenhalter (77) und einem rechten Klingenhalter (78) verbunden ist, wobei der linke Klingenhalter (77) und der rechte Klingenhalter (78) jeweils mit einer zweiten Klinge (79) bereitgestellt sind, wobei dritte Führungsschraubenmuttern (80) jeweils an dem linken Klingenhalter (77) und dem rechten Klingenhalter (78) angeordnet sind, eine zweite Zweiwege-Schraubenstange (81) an den dritten Führungsschraubenmuttern (80) angeordnet ist und ein dritter Motor (82), der fest mit der Trennplatte (68) verbunden ist, an der zweiten Zweiwege-Schraubenstange (81) angeordnet ist.

3. Kupferdrahtlackabisoliergerät nach Anspruch 1, wobei der Andrückmechanismus (5000) Folgendes umfasst:
eine Seitenstützplatte (98), die auf der oberen Fläche der unteren Platte (61) angeordnet ist, wobei ein Luftzylinder (99) an der Seitenstützplatte (98) angeordnet ist und ein Andrückblock (100) an dem teleskopischen Ende des Luftzylinders (99) angeordnet ist, wobei eine Kupferdrahtförderplatte (101) unter dem Andrückblock (100) angeordnet ist, eine Führungsradgruppe an der Kupferdrahtförderplatte (101) angeordnet ist und die Führungsradgruppe linke und rechte zweite Führungsräder (102) umfasst, wobei die zweiten Führungsräder (102) drehbar mit der Kupferdrahtförderplatte (101) verbunden sind, wobei ein Ende der Kupferdrahtförderplatte (101) mit einem oberen Andrückrad (104) bereitgestellt ist und das obere Andrückrad (104) über der Kupferdrahtförderplatte (101) angeordnet ist.

4. Kupferdrahtlackabisoliergerät nach Anspruch 3, wobei das andere Ende der Kupferdrahtförderplatte (101) mit einem sekundären Lackabstreifblock (105) bereitgestellt ist und der sekundäre Lackabstreifblock (105) mit einem quadratischen Loch (106) bereitgestellt ist, das sich zwischen jeder Gruppe von zweiten Führungsrädern (102) befindet.

5. Kupferdrahtlackabisoliergerät nach Anspruch 4, wobei das quadratische Loch (106) durch eine Abfallansaughaube (107) abgedeckt ist und die Abfallansaughaube (107) mit einem Luftansauganschluss (108) bereitgestellt ist.

6. Kupferdrahtlackabisoliergerät nach Anspruch 3 oder 5, wobei ein Führungsloch (109) in der Kupferdrahtförderplatte (101) ausgebildet ist und ein in den Andrückblock (100) integrierter Führungspfosten (110) innerhalb des Führungslochs (109) verschiebbar verbunden ist.

7. Kupferdrahtlackabisoliergerät nach Anspruch 2, wobei der obere Klingenhalter (70), der untere Klingenhalter (71), der linke Klingenhalter (77) und der rechte Klingenhalter (78) jeweils mit einem Luftweg (85) bereitgestellt sind, wobei jeder Luftweg (85) mit einem Lufteinlass (86) und einem Luftauslass (87) bereitgestellt ist, wobei die ersten Klingen (72) und die zweiten Klingen (79) jeweils mit einem zweiten Durchgangsloch (88) bereitgestellt sind und das zweite Durchgangsloch (88) mit dem Luftauslass (87) in Kommunikation steht, wobei der obere Klingenhalter (70), der untere Klingenhalter (71), der linke Klingenhalter (77) und der rechte Klingenhalter (78) jeweils durch eine Verbindungshaube (89) abgedeckt sind, wobei die Verbindungshaube (89) mit einem Verbindungsrohr (90) bereitgestellt ist, das mit dem Inneren der Verbindungshaube (89) in Kommunikation steht, wobei ein Kupferdrahtdurchdringungsloch (91) in der Rohrwand des Verbindungsrohrs (90) ausgebildet ist.

8. Kupferdrahtlackabisoliergerät nach Anspruch 7, wobei die Verbindungshaube (89) mit einem Beobachtungsfenster (92) bereitgestellt ist und das Beobachtungsfenster (92) mit einer lichtdurchlässigen Platte (93) bereitgestellt ist.

9. Kupferdrahtlackabisoliergerät nach Anspruch 7, wobei in dem Luftweg (85) ein Prozessloch (95) ausgebildet ist und in dem Prozessloch (95) eine Blockierschraube (96) angeordnet ist.

## Revendications

1. Appareil de décapage de vernis sur fil de cuivre, comprenant :
une plaque basse (61), dans lequel une surface haute de la plaque basse est pourvue sur celle-ci d'un mécanisme de raclage (4000), et deux côtés du mécanisme de raclage sont respectivement pourvus d'un mécanisme de pressage (5000) ; **caractérisé en ce que** :
une surface basse de la plaque basse est pourvue sur celle-ci d'un moteur linéaire (112) de telle sorte que la plaque basse (61) peut être montée sur une chaîne d'assemblage de telle sorte que le moteur linéaire (112) emporte la plaque basse (61) pour se déplacer linéairement,
dans lequel le mécanisme de raclage (4000) comprend :
une plaque latérale (62) disposée sur la surface haute de la plaque basse (61), dans lequel une tige de vis (63) est reliée de manière rotative à la plaque latérale (62), et une extrémité de la tige de vis (63) est manchonnée avec une courroie synchrone (64), dans lequel un premier moteur (65) est disposé sur la courroie synchrone (64), un écrou de vis mère (66) est disposé sur la tige de vis (63), et une plate-forme mobile (67) est disposée sur l'écrou de vis mère (66), de telle sorte que la rotation avant et arrière du premier moteur (65), ainsi que la transmission de la courroie synchrone (64), permettent à la tige de vis mère (63) de tourner, permettant ainsi à la plate-forme mobile (67) sur l'écrou de vis mère (66) d'effectuer un mouvement de va-et-vient sur la tige de vis mère (63), dans lequel
la plate-forme mobile (67) est pourvue d'une plaque de séparation (68) comportant un trou de passage, un côté de la plaque de séparation (68) est pourvu d'une piste verticale (69), et la piste verticale (69) est reliée de manière coulissante à un porte-lame supérieur (70) et à un porte-lame inférieur (71), dans lequel le porte-lame supérieur (70) et le porte-lame inférieur (71) sont respectivement pourvus d'une première lame (72), dans lequel des deuxièmes écrous de vis mère (73) sont respectivement disposés sur le porte-lame supérieur (70) et le porte-lame inférieur (71), une première tige de vis bidirectionnelle (74) est disposée sur les deuxièmes écrous de vis mère (73), et un deuxième moteur (75) relié de manière fixe à la plaque de séparation (68) est disposé sur la première tige de vis bidirectionnelle (74).

2. Appareil de décapage de vernis sur fil de cuivre selon la revendication 1, dans lequel l'autre côté de la plaque de séparation (68) est pourvu d'une piste horizontale perpendiculaire à la piste verticale (69), et la piste horizontale est reliée de manière coulissante à un support de lame gauche (77) et à un support de lame droit (78), dans lequel le support de lame gauche (77) et le support de lame droit (78) sont respectivement pourvus d'une seconde lame (79), dans lequel des troisièmes écrous de vis mère (80) sont respectivement disposés sur le porte-lame gauche (77) et le porte-lame droit (78), une seconde tige de vis bidirectionnelle (81) est disposée sur les troisièmes écrous de vis mère (80), et un troisième moteur (82) relié de manière fixe à la plaque de séparation (68) est disposé sur la seconde tige de vis bidirectionnelle (81).

3. Appareil de décapage de vernis sur fil de cuivre selon la revendication 1, dans lequel le mécanisme de pressage (5000) comprend :
une plaque de support latérale (98) disposée sur la surface haute de la plaque basse (61), dans lequel un vérin pneumatique (99) est disposé sur la plaque de support latérale (98), et un bloc de pressage (100) est disposé à l'extrémité télescopique du vérin pneumatique (99), dans lequel une plaque de transport de fil de cuivre (101) est disposée sous le bloc de pressage (100), un groupe de roues de guidage est disposé sur la plaque de transport de fil de cuivre (101), et le groupe de roues de guidage comprend des secondes roues de guidage gauche et droite (102), dans lequel les secondes roues de guidage (102) sont reliées de manière rotative à la plaque de transport de fil de cuivre (101), dans lequel une extrémité de la plaque de transport de fil de cuivre (101) est pourvue d'une roue de pressage supérieure (104), et la roue de pressage supérieure (104) est disposée au-dessus de la plaque de transport de fil de cuivre (101).

4. Appareil de décapage de vernis sur fil de cuivre selon la revendication 3, dans lequel l'autre extrémité de la plaque de transport de fil de cuivre (101) est pourvue d'un bloc de raclage de vernis secondaire (105), et le bloc de raclage de vernis secondaire (105) est pourvu d'un trou carré (106) situé entre chaque groupe de secondes roues de guidage (102).

5. Appareil de décapage de vernis sur fil de cuivre selon la revendication 4, dans lequel le trou carré (106) est couvert par une hotte d'aspiration de ferraille (107), et la hotte d'aspiration de ferraille (107) est pourvue d'un orifice d'aspiration d'air (108).

6. Appareil de décapage de vernis sur fil de cuivre selon la revendication 3 ou 5, dans lequel un trou de guidage (109) est formé dans la plaque de transport de fil de cuivre (101), et un goujon de guidage (110) intégré au bloc de pressage (100) est relié de manière coulissante au sein du trou de guidage (109).

7. Appareil de décapage de vernis sur fil de cuivre selon la revendication 2, dans lequel le support de lame supérieur (70), le support de lame inférieur (71), le support de lame gauche (77) et le support de lame droit (78) sont respectivement pourvus d'une voie d'air (85), dans lequel chaque voie d'air (85) est pourvue d'une entrée d'air (86) et d'une sortie d'air (87), dans lequel les premières lames (72) et les secondes lames (79) sont respectivement pourvues d'un second trou de passage (88), et le second trou de passage (88) est en communication avec la sortie d'air (87), dans lequel le support de lame supérieur (70), le support de lame inférieur (71), le support de lame gauche (77) et le support de lame droit (78) sont respectivement couverts par une hotte de liaison (89), dans lequel la hotte de liaison (89) est pourvue d'un tuyau de liaison (90) communiquant avec l'intérieur de la hotte de liaison (89), dans lequel un trou de pénétration de fil de cuivre (91) est formé dans la paroi de tuyau du tuyau de liaison (90).

8. Appareil de décapage de vernis sur fil de cuivre selon la revendication 7, dans lequel la hotte de liaison (89) est pourvue d'une fenêtre d'observation (92), et la fenêtre d'observation (92) est pourvue d'une plaque de transmission de lumière (93).

9. Appareil de décapage de vernis sur fil de cuivre selon la revendication 7, dans lequel un trou de processus (95) est formé dans la voie d'air (85), et une vis de blocage (96) est disposée dans le trou de processus (95).
